# EUROPÄISCHE PATENTSCHRIFT

(11) **EP 2 692 959 B1**
(45) Veröffentlichungstag und Bekanntmachung des Hinweises auf die Patenterteilung: **06.04.2016**
(21) Anmeldenummer: 12005517.3
(22) Anmeldetag: 29.07.2012
(51) Int. Cl.: E04B 1/68, C09J 7/02, E06B 1/62

(54) **Folienband**
Bande de feuille
Film sheet

(43) Veröffentlichungstag der Anmeldung: 05.02.2014
(73) Patentinhaber: Hanno-Werk GmbH & Co. KG, 30880 Laatzen (DE)
(72) Erfinder: Hoffmann, Hans J., 31157 Sarstedt (DE); Kethorn, Björn, 20255 Hamburg (DE); Hohlfeld, Andreas, Dr., 31832 Springe (DE); Fehrmann, Markus, 31141 Hildesheim (DE)
(74) Vertreter: Patentanwälte Thömen & Körner

(56) Entgegenhaltungen:
- WO-A1-2005/012681
- WO-A1-2009/127819
- DE-A1- 10 122 882
- DE-A1- 10 239 985
- DE-U1-202008 011 429

## Beschreibung

Die vorliegende Erfindung betrifft ein Folienband.

Folienbänder sind zum Abdichten von Fugen zwischen zusammengefügten Bauelementen im Hausbau bekannt und werden nach RAL, Leitfaden zur Planung und Ausführung der Montage von Fenstern und Haustüren, März 2010, Kap.6.4.4, auch als Fugendichtbänder bezeichnet. Abzudichtende Fugen im Hausbau werden auch als Bauanschlussfugen bezeichnet und finden sich beispielsweise zwischen einem Mauerwerk und einem Fenster- oder Türrahmen. Bekannte Folienbänder sind üblicherweise aus mehreren Lagen aufgebaut und weisen im Bereich der einen Längsseite einen schmalen Selbstklebestreifen auf, mit dem das Folienband mit dem einen Längsseitenbereich am Fenster- oder Türrahmen angeschlossen bzw. angeklebt wird. Anschließend wird das Folienband mit dem anderen Längsseitenbereich am Mauerwerk angeschlossen. Das Mauerwerk kann beispielsweise eine Außenwand oder eine Fassade sein. Der Anschluss erfolgt hierbei üblicherweise mittels eines separat auf das Mauerwerk aufgebrachten pastösen Klebers, insbesondere einer Acrylatklebemasse oder eines MS-Polymers. Der Anschluss kann aber auch bekanntermaßen durch einen wechselseitig aufgetragenen schmalen Klebestreifen oder durch einen Butylklebestreifen oder durch eine Klebemasse erfolgen.

Bekannte Folienbänder gibt es in verschiedenen Ausführungen. So gibt es Folienbänder, die für die Abdichtung von Fugen sowohl für den Innenbereich, also in Richtung Innenraum bzw. Raumluft, als auch für den Außenbereich, also in Richtung Außenraum oder Außenluft, geeignet sind. Solche Folienbänder weisen einen Selbstklebestreifen mit Folienabdeckung zum Verkleben auf dem Fensterrahmen auf und sind so ausgebildet, dass deren Dampfdurchlässigkeit im feuchten Zustand deutlich höher ist als im trockenen Zustand. Die Folienbänder haben also einen variablen s_{d}-Wert. Unter einem s_{d}-Wert wird der WasserdampfDiffusionswiderstand eines Materials, auch als "diffusionsäquivalente Luftschichtdicke" bezeichnet, verstanden. Der s_{d}-Wert mit der Einheit "m" berechnet sich aus der Schichtdicke des Materials multipliziert mit der Wasserdampfdiffusionswiderstandszahl des Materials, dem so genannten µ-Wert, wie in DIN EN ISO 12572:2001 definiert.

Weiterhin gibt es Folienbänder, die speziell für die Abdichtung von Fugen gegenüber dem Innenbereich ausgebildet sind. Solche Folienbänder weisen einen Selbstklebestreifen mit Folienabdeckung zum Verkleben auf dem Fensterrahmen auf und sind als luftdichte und dampfdiffusionshemmende Folien-Vlies-Kombination ausgebildet. Auch gibt es Folienbänder, die speziell für die Abdichtung von Fugen gegenüber dem Außenbereich ausgebildet sind. Solche Folienbänder weisen ebenfalls einen Selbstklebestreifen mit Folienabdeckung zum Verkleben auf dem Fensterrahmen auf und sind als dampfdiffusionsoffene Folien-Vlies-Kombination ausgebildet.

Ebenso bekannte Folienbänder sind vlieskaschierte oder aluminiumbeschichtete Butylbänder, die luftdicht und diffusionshemmend, bzw. diffusionsdicht sowie 1-seitig oder 2-seitig klebend ausgeführt sind. Für die elastische Fugenabdichtung im Außenbereich sind zudem Folienbänder aus diffusionsdichtem EPDM bekannt, die mit einem Selbstklebestreifen ausgeführt sein können oder mit einem separaten Kleber am Mauerwerk anschließbar sind.

Aus der DE 101 22 882 B4 ist ein selbstklebendes Band zum Abdichten von Fugen bekannt, das eine Trägerschicht auf der Bandoberseite und eine auf der Bandunterseite vorgesehene Klebeschicht, welche mit einer abziehbaren Deckfolie versehen ist, aufweist. Das Band zeigt einen seitlichen Längsabschnitt, in welchem die Trägerschicht und die Klebeschicht perforiert sind. Durch die Perforation soll die Klebehaftung des Bandes beim Überputzen verbessert werden.

WO 2005/012681 A1 offenbart eine Folienbahn für den Baubereich, die einen ersten diffusionsoffenen Folientyp und einen zweiten diffusionssperrenden Folientyp aufweist. Die Folienbahn ist entlang einer diese Folientypen teilenden Längsachse auf ihrer Vorderseite mit einer Klebstofffläche A zur Verbindung der Folienbahn mit einem Rahmenelement, beispielsweise einem Fensterrahmen, versehen. Die Folienbahn kann in mindestens einem Randbereich auf der Rückseite der Folienbahn mindestens eine doppelseitig klebende Klebstofffläche B aufweisen.

WO 2009/127819 A1 offenbart eine selbstklebende durchlässige Membranfolie mit einer durchgehenden Schicht aus einem durchlässigen Haftkleber, der auf einer Oberfläche einer durchlässigen Membranfolie aufgebracht ist.

Ausgehend von diesem Stand der Technik liegt der Erfindung die Aufgabe zugrunde, eine Alternative zu den bekannten Folienbändern bereitzustellen, das die an Folienbändern Anforderungen hinsichtlich der Schlagregendichtheit, der Dampfdiffusionsoffenheit und der Luftdichtheit erfüllt, das einfach herstellbar und zudem in seiner Gesamtheit universell einsetzbar sowie schneller, einfacher und kostengünstiger als vorhandene Produkte im Markt montierbar ist.

Diese Aufgabe wird mit einem Folienband gelöst, welches die in Anspruch 1 genannten Merkmale aufweist. Weiterbildungen und vorteilhafte Ausgestaltungen der Erfindung ergeben sich aus der nachfolgenden Beschreibung sowie den Unteransprüchen.

Das erfindungsgemäße Folienband zum Abdichten von Fugen zwischen zusammengefügten Bauelementen im Hausbau, insbesondere zwischen einem Mauerwerk und einem Fenster- oder Türrahmen, umfasst eine durch eine nicht perforierte Folie gebildete Funktionsmembran, die auf ihrer Unterseite eine vollflächig aufgebrachte Selbstklebeschicht, welche mit einer abziehbaren Deckfolie versehen ist, aufweist, wobei die Funktionsmembran an dem ersten Bauelement, insbesondere am Fenster- oder Türrahmen, über einen ersten in Längsrichtung verlaufenden Klebebereich der Selbstklebeschicht und an dem zweiten Bauelement, insbesondere am Mauerwerk, über einen zweiten in Längsrichtung verlaufenden Klebebereich der Selbstklebeschicht anschließbar bzw. anklebbar ist, wobei auf der Oberseite der Funktionsmembran eine Vliesschicht aufgebracht ist und die Funktionsmembran gebildet ist durch durch eine feuchtevariable Polymerfolie, deren Wasserdampfdiffusionskoeffizient sich in Abhängigkeit umgebenden Luftfeuchtigkeit ändert, wobei das Folienband positiv dehnbar ist, derart, dass das Folienband in Querrichtung mit weniger Kraftaufwand sowie mehr bzw. weiter dehnbar ist als in Längsrichtung.

Ein solches Folienband stellt eine Alternative zu den bekannten Folienbändern dar und gewährleistet eine sichere und vollflächige Abdichtung von Fugen zwischen zusammengefügten Bauelementen im Hausbau, insbesondere von Fugen zwischen Mauerwerk und Fenster- oder Türrahmen.

Besonders geeignete Funktionsmembranen sind beispielsweise in der DE19514420 C1, der WO 9633321 A1, der DE 10 2010 054 110 A1 oder der DE 10239985 B4 als Materialien mit einem von der Umgebungsfeuchte abhängigen Wasserdampfdiffusionswiderstand offenbart. Der Inhalt der DE19514420 C1, der WO 9633321 A1 der DE 10 2010 054 110 A1 und der DE 10239985 B4 wird insbesondere hinsichtlich dieser Materialien durch ausdrücklichen Verweis in den Offenbarungsgehalt der vorliegenden Anmeldung aufgenommen.

Weitere geeignete Funktionsmembranen sind beispielsweise in der DE 102008037292 A1 oder der WO 2010017947 A2 als feuchteadaptive Funktionsschichten offenbart. Der Inhalt der DE 102008037292 A1 bzw. der WO 2010017947 A2 wird insbesondere hinsichtlich dieser feuchteadaptiven Funktionsschichten durch ausdrücklichen Verweis in den Offenbarungsgehalt der vorliegenden Anmeldung aufgenommen.

Es kann von Vorteil sein, wenn der erste Klebebereich im Bereich der einen Längsseite der Funktionsmembran angeordnet ist, und wenn der zweite Klebebereich im Bereich der anderen Längsseite der Funktionsmembran angeordnet ist.

Es kann vorteilhaft sein, wenn die feuchtevariable Polymerfolie derart ausgebildet ist, dass sich deren Wasserdampfdiffusionskoeffizient und deren s_{d}-Wert mit steigender relativer Luftfeuchte verringern.

Ein erfindungsgemäßes Folienband ist universell für die Abdichtung einer Fuge zwischen zwei zusammengefügten Bauelementen, beispielsweise zwischen einem Baukörper, insbesondere einem Mauerwerk, und einem Rahmen oder dergleichen, insbesondere einem Fenster- oder Türrahmen, einsetzbar. Ist die Funktionsmembran zudem als feuchtevariable Polymerfolie ausgebildet, kann das Folienband sowohl für den Innenbereich als auch für den Außenbereich eingesetzt werden. Somit ist nur ein Folienband erforderlich, was auch die Lagerhaltung für den Fachhandel und den Montagebetrieb deutlich erleichtert und Fehler in der Anwendung vermeidet.

Es hat sich zudem als vorteilhaft herausgestellt, dass ein solches, einmal angeschlossenen Folienband während eines Bauvorhabens seine Eigenschaft von einer abdichtenden Funktion im Außenbereich in eine abdichtende Funktion im Innenbereich ändern kann.

Während einer ersten Bauphase, beispielsweise beim Einbau eines Fensters in eine Mauerwerksöffnung, kann das Folienband eine äußere Abdichtung der zwischen den Bauelementen ausgebildeten Fuge sicherstellen, wobei aufgrund der in dieser Bauphase vorhanden hohen relativen Luftfeuchtigkeit der s_{d}-Wert der Funktionsmembran niedrig und das Folienband damit diffusionsoffen ausgebildet ist, derart, dass das Haus oder Bauwerk austrocknen kann. Dasselbe Folienband stellt dann während bzw. nach einer zweiten Bauphase eine innere Abdichtung der zwischen den genannten Bauelementen ausgebildeten Fuge, beispielsweise nach Anbringen eines mit separater Abdichtung versehenen Wärmedämmverbundsystems, sicher, wobei aufgrund der in dieser Bauphase vorhanden geringeren relativen Luftfeuchtigkeit der s_{d}-Wert der Funktionsmembran höher und das Folienband damit diffusionshemmend ausgebildet ist.

Es kann zweckmäßig sein, wenn die Funktionsmembran so ausgebildet ist, dass diese bei einer mittleren relativen Feuchte der sie umgebenden Atmosphäre von mehr als 80 % einen Wasserdampfdiffusionswiderstand (s_{d}-Wert) von kleiner 1 m diffusionsäquivalente Luftschichtdicke aufweist.

Es kann zweckmäßig sein, wenn die Funktionsmembran so ausgebildet ist, dass diese bei einer mittleren relativen Feuchte der sie umgebenden Atmosphäre von 60 bis 80 % einen Wasserdampfdiffusionswiderstand (s_{d}-Wert) von kleiner oder gleich 5 m diffusionsäquivalente Luftschichtdicke aufweist, wobei dieser Wasserdampfdiffusionswiderstand (s_{d}-Wert) jedenfalls höher ist als der Wasserdampfdiffusionswiderstand (s_{d}-Wert), der sich bei der gleichen Funktionsmembran bei einer mittleren relativen Feuchte der sie umgebenden Atmosphäre von mehr als 80 % einstellt.

Es kann zweckmäßig sein, wenn die Funktionsmembran so ausgebildet ist, dass diese bei einer mittleren relativen Feuchte der sie umgebenden Atmosphäre von 30 bis unter 60 % einen Wasserdampfdiffusionswiderstand (s_{d}-Wert) von kleiner oder gleich 15 m diffusionsäquivalente Luftschichtdicke aufweist, wobei dieser Wasserdampfdiffusionswiderstand (s_{d}-Wert) jedenfalls höher ist als der Wasserdampfdiffusionswiderstand (s_{d}-Wert), der sich bei der gleichen Funktionsmembran bei einer mittleren relativen Feuchte der sie umgebenden Atmosphäre von 60 bis 80 % bestimmt wird.

Es kann zweckmäßig sein, wenn die Funktionsmembran so ausgebildet ist, dass diese bei einer mittleren relativen Feuchte der sie umgebenden Atmosphäre von unter 30 % einen Wasserdampfdiffusionswiderstand (s_{d}-Wert) von größer oder gleich 5 m diffusionsäquivalente Luftschichtdicke aufweist, wobei dieser Wasserdampfdiffusionswiderstand (s_{d}-Wert) jedenfalls höher ist als der größte Wasserdampfdiffusionswiderstand (s_{d}-Wert), der sich bei der gleichen Funktionsmembran bei einer mittleren relativen Feuchte der sie umgebenden Atmosphäre von 30 bis 70 % einstellt.

Eine geeignete Polyamid-Funktionsmembran ist beispielsweise so ausgebildet, dass diese bei einer mittleren relativen Feuchte der sie umgebenden Atmosphäre von 30 bis 50 % einen Wasserdampfdiffusionswiderstand (s_{d}-Wert) von 2 bis 5 m diffusionsäquivalente Luftschichtdicke und bei einer mittleren relativen Feuchte der sie umgebenden Atmosphäre von 60 bis 80 % einen Wasserdampfdiffusionswiderstand (s_{d}-Wert) von kleiner 1 m diffusionsäquivalente Luftschichtdicke aufweist.

Eine geeignete lonomer-Funktionsmembran ist beispielsweise so ausgebildet, dass diese bei einer mittleren relativen Feuchte der sie umgebenden Atmosphäre von 72,5 % einen Wasserdampfdiffusionswiderstand (s_{d}-Wert) von 0,1 bis 5 m diffusionsäquivalente Luftschichtdicke und bei einer mittleren relativen Feuchte der sie umgebenden Atmosphäre von 25 % einen Wasserdampfdiffusionswiderstand (s_{d}-Wert) von 1 bis 10 m diffusionsäquivalente Luftschichtdicke aufweist.

Eine geeignete Funktionsmembran auf Polyamid-Basis ist beispielsweise so ausgebildet, dass diese bei einer mittleren relativen Feuchte der sie umgebenden Atmosphäre von größer 70 % einen Wasserdampfdiffusionswiderstand (s_{d}-Wert) von kleiner 0,8 bis kleiner 1 m diffusionsäquivalente Luftschichtdicke, bei einer mittleren relativen Feuchte der sie umgebenden Atmosphäre von 45 bis 58% einen Wasserdampfdiffusionswiderstand (s_{d}-Wert) von 2 bis 5 m diffusionsäquivalente Luftschichtdicke und bei einer mittleren relativen Feuchte der sie umgebenden Atmosphäre von kleiner 30 % einen Wasserdampfdiffusionswiderstand (s_{d}-Wert) von 20 m diffusionsäquivalente Luftschichtdicke aufweist.

Eine geeignete Funktionsmembran ist beispielsweise so ausgebildet, dass diese bei einer mittleren relativen Feuchte der sie umgebenden Atmosphäre von 25 % einen Wasserdampfdiffusionswiderstand (s_{d}-Wert) von 20 m diffusionsäquivalente Luftschichtdicke, bei einer mittleren relativen Feuchte der sie umgebenden Atmosphäre von 37,5 % einen Wasserdampfdiffusionswiderstand (s_{d}-Wert) von 11 m diffusionsäquivalente Luftschichtdicke, bei einer mittleren relativen Feuchte der sie umgebenden Atmosphäre von 50 % einen Wasserdampfdiffusionswiderstand (s_{d}-Wert) von 11 m diffusionsäquivalente Luftschichtdicke, bei einer mittleren relativen Feuchte der sie umgebenden Atmosphäre von 65,5 % einen Wasserdampfdiffusionswiderstand (s_{d}-Wert) von 2,7 m diffusionsäquivalente Luftschichtdicke, bei einer mittleren relativen Feuchte der sie umgebenden Atmosphäre von 80 % einen Wasserdampfdiffusionswiderstand (s_{d}-Wert) von 0,32 m diffusionsäquivalente Luftschichtdicke und bei einer mittleren relativen Feuchte der sie umgebenden Atmosphäre von 90 % einen Wasserdampfdiffusionswiderstand (s_{d}-Wert) von 0,16 diffusionsäquivalente Luftschichtdicke aufweist.

Der s_{d}-Wert wird nach DIN EN ISO 12572:2001 mittels DIN EN 1931:2000 bestimmt. Hierbei wird bei definierten Umgebungsluftfeuchtigkeiten "%rF" und definiertem Feuchtigkeitsgradienten zwischen einer Seite der Folie und der anderen die durchtretende Menge an Wasser pro Zeit gravimetrisch bestimmt und nach Norm Wasserdampfdiffusionswiderstandszahl (µ) und sd-Wert "m" bestimmt.

Es kann zweckmäßig sein, wenn die Vliesschicht auf der Oberseite der Funktionsmembran mittels eines Heißschmelzklebers, vorzugsweise vollflächig aufgebracht ist.

Es kann auch von Vorteil sein, wenn auf der Unterseite der Funktionsmembran zwischen Funktionsmembran und Selbstklebeschicht eine Vliesschicht, vorzugsweise mittels Heißschmelzklebers, vorzugsweise vollflächig aufgebracht ist.

Es kann vorteilhaft sein, wenn die Selbstklebeschicht derart ausgebildet ist, dass eine Verklebung der Funktionsmembran sowohl auf Mauerwerk, Beton, Stein und dergleichen als auch auf Kunststoff, Holz oder Metall herstellbar ist.

Es kann von Vorteil sein, wenn das Folienband positiv dehnbar ist, derart, dass das Folienband in Querrichtung mit weniger Kraftaufwand dehnbar ist als in Längsrichtung. Positive Dehnung bedeutet, dass sich die Abmessung des Folienbandes in Quer- bzw. Längsrichtung vergrößert.

Vorteilhaft kann die positive Dehnung bis 200 Prozent, vorzugsweise mehr als 5 Prozent betragen. Durch diese Dehnbarkeit der Folie können Fugenbewegungen aufgenommen werden, ohne dass die Funktionalität der Dichtfolie beeinträchtigt wird. Üblicherweise ist hier eine Dehnreserve in Form von Schlaufenbildung bei dem Einbau der Folienbänder vorzusehen, vgl. RAL Leitfaden zur Planung und Ausführung der Montage von Fenstern und Haustüren, März 2010, Kapitel 6.4.4, Seite 133 und Seite 135, Ziffer 6. Eine solche aufwendige und materialverbrauchende Dehnreserve wird erfindungsgemäß aufgrund der gegebenen Dehnbarkeit vermieden.

Die Dehnbarkeit wird nach DIN EN ISO 1798:2008 bestimmt. Hierbei wird ein definierter Prüfkörper, üblicherweise durch Ausstanzen mit einem normierten Stanzwerkzeug, in eine Zugprüfmaschine eingespannt und gedehnt. Gemessen werden die maximale Kraft und die maximale Ausdehnung bis zum Bruch bzw. Riss des Prüfkörpers in den Einheiten für den Bruch MPa bzw. in N/cm und für die Dehnung (Längenänderung des Prüfkörpers im Verhältnis zur Ausgangslänge) in %

Als Bruch bzw. Riss ist vorliegend der Bruch bzw. Riss der zuerst brechenden bzw. reißenden Lage definiert. Die Dehnbarkeit ist vorliegend definiert als die Dehnung bis zum Bruch bzw. Riss der zuerst brechenden bzw. reißenden Lage. So reißt beispielsweise das Vlies, während die Membran weiterhin dehnbar ist.

Bei einem geeigneten erfindungsgemäßen Folienband kann der Riss der ersten Schicht in Querrichtung beispielsweise bei 7 MPa bzw. 210% und in Längsrichtung beispielsweise bei 18 MPa bzw. 26% liegen.

Es kann von Vorteil sein, wenn die Dehnung der vlieskaschierten Funktionsmembran in Längsrichtung zwischen 0 und 50 %, vorzugsweise zwischen 20 und 30% beträgt. Es kann von Vorteil sein, wenn die Dehnung der vlieskaschierten Funktionsmembran in Querrichtung zwischen 100 und 300 %, vorzugsweise zwischen 150 und 240 % beträgt.

Es kann von Vorteil sein, wenn die Dehnung der reinen Funktionsmembran in Quer- und in Längsrichtung mehr als 300 % beträgt.

Es kann vorteilhaft sein, wenn auf der Oberseite der Funktionsmembran, insbesondere auf der dort angeordneten Vliesschicht, zumindest ein in Längsrichtung verlaufender Selbstklebestreifen, der mit einer abziehbaren Deckfolie versehen ist, angeordnet ist, vorzugsweise derart, dass das Folienband über diesen mit einem Bauelement verklebbar ist.

Es kann von Vorteil sein, wenn auf der Oberseite der Funktionsmembran, insbesondere auf der dort angeordneten Vliesschicht, ein in Längsrichtung verlaufender Selbstklebestreifen, der mit einer abziehbaren Deckfolie versehen ist, angeordnet ist, über welchen die Funktionsmembran an dem ersten Bauelement, insbesondere am Fenster- oder Türrahmen, anschließbar bzw. anklebbar ist.

Es kann von Vorteil sein, wenn die Selbstklebeschicht und/oder die Selbstklebestreifen aus einem Acrylathaftkleber bestehen, der vorzugsweise mit einem Auftragsgewicht von 80 bis 500 g/m², besonders bevorzugt von 110 bis 300 g/m², ganz besonders bevorzugt bezogen auf die Selbstklebeschicht von 220 bis 250 g/m² und bezogen auf die auf der Oberseite der Funktionsmembran bzw. auf der dort aufgebrachten Vliesschicht angeordneten Selbstklebestreifen von 110 bis 140 g/m², aufgebracht ist.

Das Auftragsgewicht wird nach am Anmeldetag aktueller ISO 3801 bzw. DIN EN 12127:1997 bestimmt. Hierbei wird ein definierter und normkonformer Stanzkörper oder Ausschnitt mit 100 cm² Fläche hergestellt, gewogen und das Gewicht pro Fläche in "g/m²" berechnet.

Es kann zweckmäßig sein, wenn die Selbstklebeschicht und/oder zumindest ein Selbstklebestreifen eine die positive Dehnung begrenzende Gittergewebeeinlage oder Vlieseinlage aufweist, wobei vorzugsweise nur die auf der Oberseite der Funktionsmembran bzw. auf der dort aufgebrachten Vliesschicht angeordnete Selbstklebestreifen eine Gittergewebeeinlage oder Vlieseinlage aufweisen, die auf der Unterseite der Funktionsmembran angeordnete Selbstklebeschicht dagegen nicht.

Wenn die Selbstklebeschicht ohne Gittergewebeeinlage oder Vlieseinlage auskommt, bleibt vorteilhaft Querdehnfähigkeit erhalten. Die Selbstklebeschicht weist also vorteilhaft keine Dehnsperre auf. Wenn der auf der Oberseite angeordnete Selbstklebstreifen als erstes an einen Fenster- oder Türrahmen angeschlossen wird, ist dagegen eine Dehnung unerwünscht. Daher kann dort vorteilhaft eine Dehnsperre durch eine Gittergewebeeinlage oder Vlieseinlage ausgebildet werden.

Es kann zweckmäßig sein, wenn die auf der Selbstklebeschicht angeordnete abziehbare Deckfolie eine oder mehrere in Längsrichtung verlaufende Perforationslinien aufweist, derart, dass vorgegebene in Längsrichtung verlaufende Abschnitte der Deckfolie getrennt voneinander abziehbar sind, vorzugsweise derart, dass derjenige in Längsrichtung verlaufende Abschnitt der Abdeckfolie, der auf dem ersten Klebebereich angeordnet ist, separat von der Selbstklebeschicht abziehbar ist.

Es kann vorteilhaft sein, wenn die Dicke der Funktionsmembran 20 bis 100 µm beträgt.

Es kann vorteilhaft sein, wenn die Dicke der Funktionsmembran mit aufkaschierter Vliesschicht 100 bis 500 µm, vorzugsweise 150 bis 400 µm, ganz vorzugsweise 250 bis 300 µm beträgt.

Es kann vorteilhaft sein, wenn die Dicke der Selbstklebeschicht oder eines Selbstklebestreifens 100 bis 300 µm, vorzugsweise 170 bis 270 µm beträgt.

Es kann vorteilhaft sein, wenn die Dicke der Abdeckfolie 50 bis 100 µm, vorzugsweise 60 bis 80 µm beträgt.

Unter einer Deck- bzw. Abdeckfolie werden erfindungsgemäß auch Abdeckpapiere verstanden. Solche Abdeckfolien werden auch als Liner oder ganz allgemein als Schutz bezeichnet. Diese dienen dazu, die Selbstklebeschicht oder die Selbstklebestreifen vor Schmutz und dergleichen zu schützen bzw. ein Auf- bzw. Abrollen des Folienbandes auch bei stark haftendem Kleber zu ermöglichen.

Die vorgenannten Dicken werden vorzugsweise gemäß DIN 53855 bestimmt. Dabei wird mittels eines normkonformen Dickentasters und einer Auflagefläche von 10 cm² mit in der Norm definiertem Andruck die Dicke des Prüfkörpers gemessen.

Weitere vorteilhafte Ausgestaltungen der Erfindung ergeben sich aus der Zeichnung. In dieser zeigen:
- Fig. 1: ein erfindungsgemäß alternatives Folienband im Querschnitt in a) einer ersten Ausführungsform, b) einer zweiten Ausführungsform, c) einer dritten Ausführungsform, d) einer vierten Ausführungsform, e) einer fünften Ausführungsform und f) einer sechsten Ausführungsform,
- Fig. 2: das erfindungsgemäß alternative Folienband gemäß Fig. 1 f) in Draufsicht auf dessen Unterseite
- Fig. 3: schematisch die Anordnung zweier Folienbänder im Innenbereich und im Außenbereich zur Fugenabdichtung,
- Fig. 4: schematisch die Anordnung eines Folienbandes im Außenbereich zur Fugenabdichtung während einer ersten Bauphase, und
- Fig. 5: schematisch die gleichbleibende Anordnung des Folienbandes gemäß Fig. 4, nunmehr allerdings im Innenbereich zur Fugenabdichtung während bzw. nach einer zweiten Bauphase.

In der Zeichnung sind die für das Verständnis der Erfindung wesentlichen Merkmale dargestellt und erläutert. Die in den Figuren dargestellten Gegenstände sind bereits in Verbindung mit der Bezugszeichenliste für den Fachmann ohne Weiteres verständlich. Werden in den Figuren gleiche Bezugsziffern verwendet, so bezeichnen diese gleiche Teile.

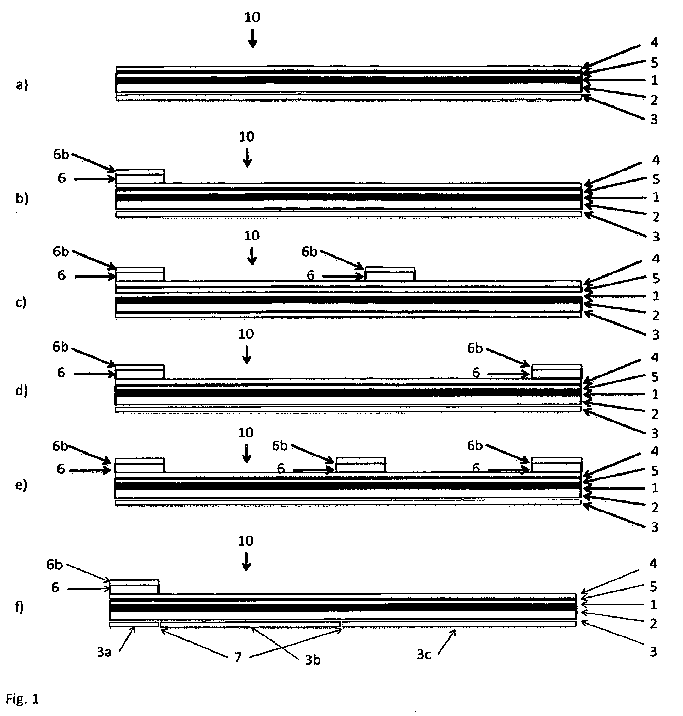

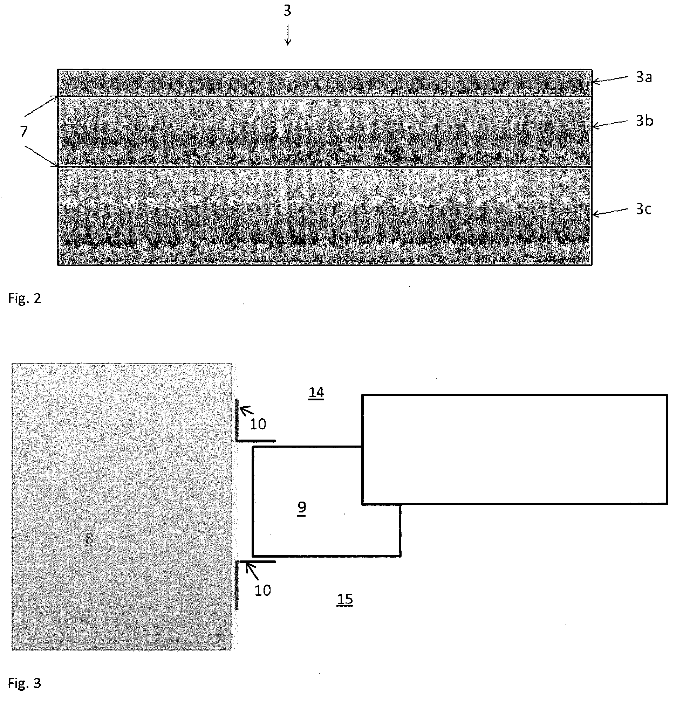

Fig. 1 zeigt das erfindungsgemäße Folienband 10 in sechs verschiedenen Ausgestaltungen. Das erfindungsgemäße Folienband 10 zum Abdichten von Fugen zwischen einem in den Fig. 3 bis 5 dargestellten Mauerwerk 8 und einem in den Fig. 3 bis 5 dargestellten Fensterrahmen 9 umfasst eine durch eine nicht perforierte Folie gebildete Funktionsmembran 1, die auf ihrer Unterseite eine vollflächig aufgebrachte Selbstklebeschicht 2, welche mit einer abziehbaren Deckfolie 3 versehen ist, aufweist. Die Funktionsmembran 1 ist an dem in den Fig. 3 bis 5 dargestellten Fensterrahmen 9 über einen ersten in Längsrichtung verlaufenden Klebebereich der Selbstklebeschicht 2 anschließbar bzw. anklebbar. Die Funktionsmembran 1 ist an dem in den Fig. 3 bis 5 dargestellten Mauerwerk 8 über einen zweiten in Längsrichtung verlaufenden Klebebereich der Selbstklebeschicht 2 anschließbar bzw. anklebbar.

Auf der Oberseite der Funktionsmembran 1 ist eine Vliesschicht 4 mittels eines Heißschmelzklebers 5 vollflächig aufgebracht.

Damit das Folienband 10 nach dem Anschließen bzw. Ankleben auftretende Fugenbewegungen aufnimmt, ist dasselbe dehnbar ausgebildet, wobei die Dehnbarkeit in Querrichtung größer ist als in Längsrichtung.

Auf der Oberseite der Funktionsmembran 1, insbesondere auf der dort angeordneten Vliesschicht 4 sind keine (Ausgestaltung a) gemäß Fig. 1), ein (Ausgestaltung b) + f) gemäß Fig. 1), zwei (Ausgestaltung c) + d) gemäß Fig. 1) oder drei (Ausgestaltung e) gemäß Fig. 1) in Längsrichtung verlaufende Selbstklebestreifen 6, die jeweils mit einer abziehbaren Deckfolie 6b versehen sind, angeordnet. Vorzugsweise ist das Folienband 10 über einen dieser Selbstklebestreifen mit dem in den Fig. 3 bis 5 dargestellten Fensterrahmen 9 verklebbar.

Wie in Fig. 1. f) und Fig. 2 dargestellt kann die auf der Selbstklebeschicht 2 angeordnete abziehbare Abdeckfolie 3 mehrere in Längsrichtung verlaufende Perforationslinien 7 aufweisen, derart, dass vorgegebene in Längsrichtung verlaufende Abschnitte 3a, 3b, 3c der Abdeckfolie 3 getrennt voneinander abziehbar sind, vorzugsweise derart, dass derjenige in Längsrichtung verlaufende Abschnitt 3b der Abdeckfolie 3, der auf dem ersten Klebebereich angeordnet ist, separat von der Selbstklebeschicht 2 abziehbar ist.

Das erfindungsgemäße Folienband 10 ist universell für die Abdichtung einer Fuge zwischen einem Mauerwerk und einem Fensterrahmen einsetzbar. Da die Funktionsmembran 1 als feuchtevariable Polymerfolie ausgebildet ist, kann das Folienband 10 sowohl für den Innenbereich 14 als auch für den Außenbereich 15, wie in Fig. 3 dargestellt, eingesetzt werden. Somit ist nur ein Folienband 10 erforderlich.

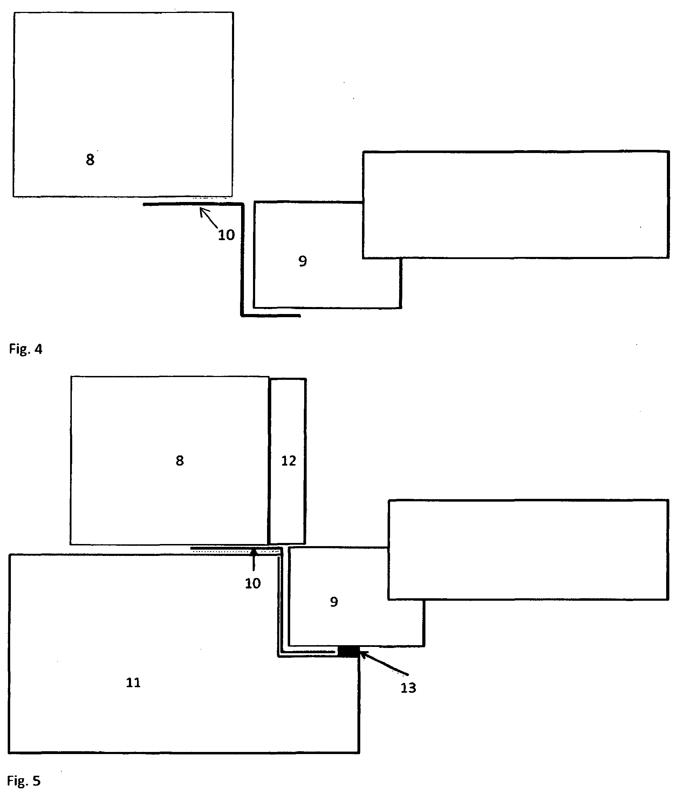

Es hat sich aber besonders vorteilhaft herausgestellt, dass ein solches, einmal angeschlossenes Folienband 10 während eines Bauvorhabens seine Eigenschaft von einer abdichtenden Funktion im Außenbereich, wie in Fig. 4 dargestellt, in eine abdichtende Funktion im Innenbereich, wie in Fig. 5 dargestellt, ändern kann.

Während einer ersten Bauphase, beispielsweise nach Fixierung eines Fensterrahmens 9 in einer Mauerwerksöffnung, kann das Folienband 10 eine äußere Abdichtung der zwischen den Bauelementen 8 und 9 ausgebildeten Fuge sicherstellen, wobei aufgrund der in dieser Bauphase vorhandenen hohen relativen Luftfeuchtigkeit der s_{d}-Wert der Funktionsmembran 1 niedrig und das Folienband 10 damit diffusionsoffen ausgebildet ist, derart, dass das Haus oder Bauwerk austrocknen kann, siehe Fig. 4. Dasselbe Folienband 10 stellt dann gemäß Fig. 5 während bzw. nach einer zweiten Bauphase eine innere Abdichtung der zwischen den genannten Bauelementen 8 und 9 ausgebildeten Fuge, beispielsweise nach Anbringen eines mit separater Abdichtung versehenen Wärmedämmverbundsystems 11 mit eigener Abdichtung 13, sicher, wobei aufgrund der in dieser Bauphase vorhandenen geringeren relativen Luftfeuchtigkeit der s_{d}-Wert der Funktionsmembran 1 höher und das Folienband 10 damit diffusionshemmend ausgebildet ist.

### Bezugszeichenliste

(ist Bestandteil der Beschreibung)
- 1: Funktionsmembran
- 2: Selbstklebeschicht
- 3: Abdeckfolie
- 4: Vliesschicht
- 5: Heißschmelzkleber
- 6: Selbstklebestreifen
- 6b: Abdeckfolie
- 7: Perforationslinie in Abdeckfolie 3
- 8: Mauerwerk
- 9: Fensterrahmen
- 10: Folienband
- 11: z.B. Wärmedämmverbundsystem
- 12: Putz
- 13: Dichtung WDVS
- 14: Innenbereich
- 15: Außenbereich

## Patentansprüche

1. Folienband (10) zum Abdichten von Fugen zwischen zusammengefügten Bauelementen im Hausbau, insbesondere zwischen einem Mauerwerk (8) und einem Fenster- oder Türrahmen (9), umfassend eine durch eine nicht perforierte Folie gebildete Funktionsmembran (1), die auf ihrer Unterseite eine vollflächig aufgebrachte Selbstklebeschicht (2), welche mit einer abziehbaren Deckfolie (3) versehen ist, aufweist, wobei die Funktionsmembran (1) an dem ersten Bauelement, insbesondere am Fenster- oder Türrahmen (9), über einen ersten in Längsrichtung verlaufenden Klebebereich der Selbstklebeschicht (2) und an dem zweiten Bauelement, insbesondere am Mauerwerk (8), über einen zweiten in Längsrichtung verlaufenden Klebebereich der Selbstklebeschicht (2) anschließbar bzw. anklebbar ist, wobei auf der Oberseite der Funktionsmembran (1) eine Vliesschicht (4) aufgebracht ist und die Funktionsmembran (1) gebildet ist durch eine feuchtevariable Polymerfolie, deren Wasserdampfdiffusionskoeffizient sich in Abhängigkeit umgebenden Luftfeuchtigkeit ändert, wobei das Folienband (10) positiv dehnbar ist, derart, dass das Folienband (10) in Querrichtung mit weniger Kraftaufwand sowie mehr bzw. weiter dehnbar ist als in Längsrichtung.

2. Folienband (10) nach Anspruch 1, **dadurch gekennzeichnet, dass** der erste Klebebereich im Bereich der einen Längsseite der Funktionsmembran (1) angeordnet ist, und dass der zweite Klebebereich im Bereich der anderen Längsseite der Funktionsmembran (1) angeordnet ist.

3. Folienband (10) nach Anspruch 1 oder 2, **dadurch gekennzeichnet, dass** die feuchtevariable Polymerfolie derart ausgebildet ist, dass sich deren Wasserdampfdiffusionskoeffizient und deren s_{d}-Wert mit steigender relativer Luftfeuchte verringern.

4. Folienband (10) nach einem der Ansprüche 1 bis 3, **dadurch gekennzeichnet, dass** die Vliesschicht (4) auf der Oberseite der Funktionsmembran (1) mittels eines Heißschmelzklebers (5), vorzugsweise vollflächig aufgebracht ist.

5. Folienband (10) nach einem der Ansprüche 1 bis 4, **dadurch gekennzeichnet, dass** auf der Unterseite der Funktionsmembran zwischen der Funktionsmembran und der Selbstklebeschicht (2) eine Vliesschicht (4), vorzugsweise mittels eines Heißschmelzklebers (5), vorzugsweise vollflächig aufgebracht ist.

6. Folienband (10) nach einem der Ansprüche 1 bis 5, **dadurch gekennzeichnet, dass** die Selbstklebeschicht (2) derart ausgebildet ist, dass eine Verklebung der Funktionsmembran (1) sowohl auf Mauerwerk (8), Beton, Stein und dergleichen als auch auf Kunststoff, Holz oder Metall herstellbar ist.

7. Folienband (10) nach Anspruch 1, **dadurch gekennzeichnet, dass** die positive Dehnung bis 200 Prozent, vorzugsweise mehr als 5 Prozent beträgt.

8. Folienband (10) nach einem der Ansprüche 1 bis 7, **dadurch gekennzeichnet, dass** auf der Oberseite der Funktionsmembran (1), insbesondere auf der dort angeordneten Vliesschicht (4), zumindest ein in Längsrichtung verlaufender Selbstklebestreifen (6), der mit einer abziehbaren Deckfolie (6a) versehen ist, angeordnet ist, vorzugsweise derart, dass das Folienband (10) über diesen mit einem Bauelement verklebbar ist.

9. Folienband (10) nach einem der Ansprüche 1 bis 7, **dadurch gekennzeichnet, dass** auf der Oberseite der Funktionsmembran (1), insbesondere auf der dort angeordneten Vliesschicht (4), ein in Längsrichtung verlaufender Selbstklebestreifen (6), der mit einer abziehbaren Deckfolie (6a) versehen ist, angeordnet ist, über welchen die Funktionsmembran (1) an dem ersten Bauelement, insbesondere am Fenster- oder Türrahmen (9), anschließbar bzw. anklebbar ist.

10. Folienband (10) nach einem der Ansprüche 1 bis 9, **dadurch gekennzeichnet, dass** die Selbstklebeschicht (2) und/oder der oder die Selbstklebestreifen (6) aus einem Acrylathaftkleber bestehen, der vorzugsweise mit einem Auftragsgewicht von 80 bis 500 g/m², besonders bevorzugt von 110 bis 300 g/m², ganz besonders bevorzugt bezogen auf die Selbstklebeschicht (2) von 220 bis 250 g/m² und bezogen auf die auf der Oberseite der Funktionsmembran (1) bzw. auf der dort aufgebrachten Vliesschicht (4) angeordneten Selbstklebestreifen (6) von 110 bis 140 g/m², aufgebracht ist.

11. Folienband (10) nach einem der Ansprüche 7 bis 10, **dadurch gekennzeichnet, dass** die Selbstklebeschicht (2) und/oder zumindest ein Selbstklebestreifen (6) eine die positive Dehnung begrenzende Gittergewebeeinlage oder Vlieseinlage aufweist, wobei vorzugsweise nur die auf der Oberseite der Funktionsmembran (1) bzw. auf der dort aufgebrachten Vliesschicht angeordneten Selbstklebestreifen (6) eine Gittergewebeeinlage oder Vlieseinlage aufweisen, die auf der Unterseite der Funktionsmembran (1) angeordnete Selbstklebeschicht (2) dagegen nicht.

12. Folienband (10) nach einem der Ansprüche 1 bis 11, **dadurch gekennzeichnet, dass** die auf der Selbstklebeschicht (2) angeordnete abziehbare Abdeckfolie (3) eine oder mehrere in Längsrichtung verlaufende Perforationslinien (7) aufweist, derart, dass vorgegebene in Längsrichtung verlaufende Abschnitte der Abdeckfolie (3) getrennt voneinander abziehbar sind, vorzugsweise derart, dass derjenige in Längsrichtung verlaufende Abschnitt der Abdeckfolie (3), der auf dem ersten Klebebereich angeordnet ist, separat von der Selbstklebeschicht abziehbar ist.

## Claims

1. A film strip (10) for sealing gaps between joined-together structural components in building construction, in particular between masonry (8) and a window or door frame (9), comprising a functional membrane (1) which is formed by a non-perforated film and which has, on its underside, a self-adhesive layer (2) which is applied onto the full surface and which is equipped with a removable covering film (3), wherein the functional membrane (1) is able to be connected or affixed to the first structural component, in particular to the window or door frame (9), via a first adhesive region of the self-adhesive layer (2) which runs in the longitudinal direction, and to the second structural component, in particular to the masonry (8), via a second adhesive region of the self-adhesive layer (2) running in the longitudinal direction, wherein a non-woven fabric material layer (4) is applied onto the upper side of the functional membrane (1) and the functional membrane (1) is formed by a moisture-variable polymer film of which the water vapour diffusion coefficient changes as a function of the surrounding air moisture, wherein the film strip (10) is positively stretchable such that the film strip (10) is able to be stretched more or further in the transverse direction than in the longitudinal direction with less exertion.

2. The film strip (10) according to Claim 1, **characterised in that** the first adhesive region is arranged in the region of one longitudinal side of the functional membrane (1), and that the second adhesive region is arranged in the region of the other longitudinal side of the functional membrane (1).

3. The film strip (10) according to Claim 1 or 2, **characterised in that** the moisture-variable polymer film is formed such that its water vapour diffusion coefficient and its s_{d}-value decrease as the relative air moisture increases.

4. The film strip (10) according to any one of Claims 1 to 3, **characterised in that** the non-woven fabric material layer (4) is applied onto the upper side of the functional membrane (1), preferably onto the full surface, by means of a hot melt adhesive (5).

5. The film strip (10) according to any one of Claims 1 to 4, **characterised in that** a non-woven fabric material layer (4) is applied onto the underside of the functional membrane, preferably onto the full surface, between the functional membrane and the self-adhesive layer (2), preferably by means of a hot melt adhesive (5).

6. The film strip (10) according to any one of Claims 1 to 5, **characterised in that** the self-adhesive layer (2) is formed such that an adhesion of the functional membrane (1) can be produced both onto masonry (8), cement, stone and the like and onto plastic, wood or metal.

7. The film strip (10) according to Claim 1, **characterised in that** the positive stretching is up to 200 per cent, preferably more than 5 per cent.

8. The film strip (10) according to any one of Claims 1 to 7, **characterised in that** at least one self-adhesive stripe (6) which runs in the longitudinal direction and which is equipped with a removable cover film (6a) is arranged on the upper side of the functional membrane (1), in particular on the non-woven fabric material layer (4) arranged there, preferably such that the film strip (10) can be glued onto a structural element via this.

9. The film strip (10) according to any one of Claims 1 to 7, **characterised in that** on the upper side of the functional membrane (1), in particular on the non-woven fabric material layer (4) arranged there, there is arranged a self-adhesive stripe (6), which runs in the longitudinal direction and which is equipped with a removable cover film (6a) and via which the functional membrane (1) can be connected or affixed to the first structural component, in particular to the window or door frame (9).

10. The film strip (10) according to any one of Claims 1 to 9, **characterised in that** the self-adhesive layer (2) and/or the self-adhesive stripe(s) (6) consist of an acrylic pressure-sensitive adhesive which is preferably applied with an application weight of 80 to 500 g/m², particularly preferred of 110 to 300 g/m², most particularly preferred relative to the self-adhesive layer (2) of 220 to 250 g/m² and relative to the self-adhesive stripes (6), arranged on the upper side of the functional membrane (1) or on the non-woven fabric material layer (4) applied thereon, of 110 to 140 g/m².

11. The film strip (10) according to any one of Claims 7 to 10, **characterised in that** the self-adhesive layer (2) and/or at least one self-adhesive stripe (6) has a mesh inlay or non-woven fabric material inlay which limits the positive stretching, wherein preferably only the self-adhesive stripes (6) arranged on the upper side of the functional membrane (1) or on the non-woven fabric layer applied thereon have a mesh inlay or non-woven fabric material inlay, and the self-adhesive layer (2) arranged on the underside of the functional membrane (1) does not.

12. The film strip (10) according to any one of Claims 1 to 11, **characterised in that** the removable covering film (3) arranged on the self-adhesive layer (2) has one or more perforated lines (7), which run in the longitudinal direction, such that specified sections of the covering film (3) running in the longitudinal direction are able to be removed separately from one another preferably such that that section of the covering film (3) which runs in the longitudinal direction and which is arranged on the first adhesive region can be removed separately from the self-adhesive layer.

## Revendications

1. Feuille en bande (10) servant à rendre étanches des joints entre des éléments de construction assemblés dans le domaine du bâtiment, en particulier entre la maçonnerie (8) et un châssis de fenêtre ou de porte (9), feuille en bande comprenant une membrane fonctionnelle (1) formée par une feuille non perforée et présentant sur sa face inférieure, de préférence de manière à recouvrir celle-ci entièrement, une couche autoadhésive (2) pourvue d'une feuille protectrice pelable (3), la membrane fonctionnelle (1) pouvant être raccordée ou collée au premier élément de construction, en particulier au châssis de fenêtre ou de porte (9) par l'intermédiaire une première zone de collage orientée longitudinalement de la couche autoadhésive (2) et au second élément de construction, en particulier à la maçonnerie (8), par l'intermédiaire une seconde zone de collage orientée longitudinalement de la couche adhésive (2), une couche non-tissée (4) étant appliquée sur la face supérieure de la membrane fonctionnelle (1) et la membrane fonctionnelle (1) étant formée par une feuille polymère hygrovariable, dont le coefficient de diffusion de vapeur d'eau varie en fonction de l'humidité de l'air, la feuille en bande (10) étant étirable positivement de façon qu'elle peut être étirée davantage et avec un apport de force moindre dans le sens transversal que dans celui longitudinal.

2. Feuille en bande (10) suivant la revendication 1, **caractérisée en ce que** la première zone de collage est disposée dans la région de l'un des côtés longitudinaux de la membrane fonctionnelle (1) et **en ce que** la seconde zone de collage est disposée dans la région de l'autre côté longitudinal de la membrane fonctionnelle (1).

3. Feuille en bande (10) suivant la revendication 1 ou 2, **caractérisée en ce que** la feuille polymère hygrovariable est conçue de façon que son coefficient de diffusion de la vapeur d'eau et sa valeur s_{d}- diminuent à humidité de l'air croissante.

4. Feuille en bande (10) suivant une des revendications 1 à 3, **caractérisée en ce que** la couche non-tissé (4) est appliquée au moyen d'une colle thermofusible (5) sur la face supérieure de la membrane fonctionnelle (1), face supérieure, qu'elle recouvre de préférence entièrement.

5. Feuille en bande (10) suivant une des revendications 1 à 4, **caractérisée en ce qu'**une couche non-tissée (4) est appliquée, de préférence au moyen d'une colle thermofusible (5), sur la face inférieure de la membrane fonctionnelle, entre celle-ci et la couche autoadhésive (2), face inférieure qu'elle recouvre de préférence entièrement.

6. Feuille en bande (10) suivant une des revendications 1 à 5, **caractérisée en ce que** la couche autoadhésive (2) est conçue de façon qu'un collage de la membrane fonctionnelle (1) est réalisable aussi bien sur de la maçonnerie (8), du béton, de la pierre et similaire, que sur de la matière artificielle, du bois ou du métal.

7. Feuille en bande (10) suivant la revendication 1, **caractérisée en ce que** l'étirement positif s'élève jusqu'à 200 pourcent, de préférence à plus de 5 pourcent.

8. Feuille en bande (10) suivant une des revendications 1 à 7, **caractérisée en ce qu'**au moins une bande autocollante (6) s'étendant dans le sens longitudinal et pourvue d'une feuille protectrice pelable (6a) est disposée sur la face supérieure de la membrane fonctionnelle (1), en particulier sur la couche non-tissée (4) qui y est disposée, de préférence de façon que la feuille en bande (10) peut être collée sur un élément de construction par l'intermédiaire de la bande autocollante (6).

9. Feuille en bande (10) suivant une des revendications 1 à 7, **caractérisée en ce qu'**une bande autocollante (6) s'étendant dans le sens longitudinal et pourvue d'une feuille protectrice pelable (6a) est disposée sur la face supérieure de la membrane fonctionnelle (1), en particulier sur la couche non-tissée (4) qui y est disposée, par l'intermédiaire de laquelle la membrane fonctionnelle (1) peut être raccordée ou collée au premier élément de construction, en particulier au châssis de fenêtre ou de porte (9).

10. Feuille en bande suivant une des revendications 1 à 9, **caractérisée en ce que** la couche autoadhésive (2) et/ou les bandes autoadhésives (6) sont constituées d'une colle acrylique qui est appliquée, de préférence avec un poids d'application de 80 à 500 g/m², mieux encore de 110 à 300 g/m², au mieux, par rapport à la couche autoadhésive (2), de 220 à 250 g/m² et, par rapport aux bandes autoadhésives (6) disposées sur la face supérieure de la membrane fonctionnelle (1), c'est-à-dire sur la couche non-tissée (6) qui y est appliquée, de 110 à 140 g/m².

11. Feuille en bande (10) suivant une des revendications 7 à 10, **caractérisée en ce que** la couche autoadhésive (2) et/ou au moins une bande autoadhésive (6) présente une armature en nappe de treillis ou une armature en non-tissé limitant l'étirement positif, de préférence seules les bandes autoadhésives (6) disposées sur la face supérieure de la membrane fonctionnelle (1), c'est-à-dire sur la couche non-tissée qui y est appliquée, présentant une armature en nappe de treillis ou une armature en non-tissé et non pas la couche autoadhésive (2) disposée sur la face inférieure de la membrane fonctionnelle (1).

12. Feuille en bande (10) suivant une des revendications 1 à 11, **caractérisée en ce que** la feuille protectrice pelable (3) disposée sur la couche autoadhésive (3) présente une ou plusieurs lignes de perforations (7) s'étendant dans le sens longitudinal de façon que des parties prédéterminées, orientées longitudinalement de la feuille protectrice (3) sont pelables séparément les unes des autres, de préférence de façon que la partie orientée longitudinalement de la feuille protectrice (3) et disposée sur la première zone de collage est pelable séparément de la couche autoadhésive.
